# EUROPÄISCHE PATENTSCHRIFT

(11) **EP 3 477 804 B1**
(45) Veröffentlichungstag und Bekanntmachung des Hinweises auf die Patenterteilung: **09.09.2020**
(21) Anmeldenummer: 18212687.0
(22) Anmeldetag: 15.06.2016
(51) Int. Cl.: H02B 3/00, G05B 19/418, G06T 11/60, H05K 7/14, H02B 1/32, G05B 15/02

(54) **VERFAHREN ZUM MONTIEREN UND VERDRAHTEN VON ELEKTRISCHEN SCHALTANLAGEN SOWIE EIN AUGMENTED REALITY VORRICHTUNG ZUM ERLEICHTERN DER MONTAGE SOLCHER SCHALTANLAGEN**
METHOD FOR MOUNTING AND WIRING OF ELECTRICAL SWITCHGEAR AS WELL AS A VIRTUAL REALITY DEVICE TO FACILITATE THE MOUNTING OF SUCH SWITCHGEAR
PROCÉDÉ DE MONTAGE ET DE CÂBLAGE DES INSTALLATIONS DE COMMUTATION ÉLECTRIQUES AINSI QUE DISPOSITIF D'AIDE AU MONTAGE EN RÉALITÉ VIRTUELLE DESTINÉ À FACILITER LE MONTAGE DE TELLES INSTALLATIONS DE COMMUTATION

(30) Priorität: 16.06.2015 DE 102015007624
(43) Veröffentlichungstag der Anmeldung: 01.05.2019
(62) Teilanmeldung aus: 16730253.8
(73) Patentinhaber: Liebherr-Components Biberach GmbH, 88400 Biberach/Riss (DE)
(72) Erfinder: Fenker, Oliver, 88447 Warthausen (DE)
(74) Vertreter: Thoma, Michael

(56) Entgegenhaltungen:
- WO-A1-2008/107021
- DE-A1- 19 512 840
- DE-A1- 19 918 212

## Beschreibung

Die vorliegende Erfindung betrifft ein Verfahren zum Montieren von elektrischen Schaltanlagen, bei dem elektrische Bauteile an vorbestimmten Anschlusspunkten verdrahtet und/oder miteinander verbunden werden. Die Erfindung betrifft ferner eine Montagehilfsvorrichtung zum Erleichtern und/oder Prüfen der Montage solcher elektrischer Schaltanlagen.

Derartige Schaltanlagen können beispielsweise die Schaltschränke von Bau- oder Materialumschlagmaschinen wie Kranen oder Erdbewegungsmaschinen oder andere Arbeitsmaschinen sein und verschiedene leistungselektronische Bauteile wie Frequenzumrichter, Steuerungselektronik, Kondensatoren sowie verschiedene Kabel mit unterschiedlichen Durchmessern, unterschiedlichen Leitertypen und unterschiedlichen Anschlüssen und dergleichen enthalten. Die Montage solcher elektronischer Schaltanlagen ist regelmäßig hochkomplex, erfordert eine hohe Konzentration des Werkers und ist auch unter Zuhilfenahme von Schaltplänen fehleranfällig. Zum einen müssen nicht nur die Bauteile im Schaltschrank richtig angeordnet werden, sondern es müssen auch die richtigen Anschlusspunkte der richtigen Bauteile mit den jeweils richtigen Kabeln oder Drähten verbunden werden, wobei hier im Schaltschrank nach und nach eine große Anzahl von Kabeln angeordnet wird. Dabei können Bauteile eine Vielzahl von Anschlusspunkten umfassen, an denen ein entsprechendes Bauteil mit diversen anderen Bauteilen zu verdrahten ist, wobei jeweils der richtige Anschlusspunkt mit dem richtigen Bauteil zu verbinden ist. Je nach Bauteil und Verbindung sind hierbei auch Kabel der richtigen Dicke und des richtigen Kabeltyps zu verwenden. Durch die Vielfältigkeit bzw. Verschiedenheit der zu verbauenden und miteinander zu verbindenden Bauteile ist eine standardisierte Ausführung der Arbeitsschritte, die einem Schema folgt, schwierig und auch nicht einfach zu überwachen.

Üblicherweise werden solche Schaltanlagen bisher mit Hilfe eines Schaltplans oder auch unter Zuhilfenahme von Leitungen, auf denen der Start- und Zielanschluss aufgedruckt ist, verdrahtet. In beiden Fällen muss der Werker beide Anschlüsse suchen und die Leitungen entsprechend verlegen. Wird mit einem Schaltplan gearbeitet, muss auch noch markiert werden, welche der Leitungen bereits verlegt worden ist.

Alle diese Arbeiten werden bisher üblicherweise händisch durchgeführt und führen immer wieder zu Fehlern, welche in einem zusätzlichen Prüfschritt aufwändig korrigiert werden müssen. Aufgrund der händischen Verdrahtung, die eine gewisse Fehlerrate aufweist, und der Prüfung, die nicht alle Fehler verlässlich findet, kommt es immer wieder vor, dass Fehler erst beim bestimmungsgemäßen Einsatz durch den Abnehmer des Geräts auffallen.

Aus der DE 199 18 212 A1 ist es bekannt, die in einem Schaltschrank zu verbauenden Kabel zu Kabelbündeln zusammenzufassen, die jeweils für ein zu verdrahtendes Schaltgerät bestimmt sind und ein Etikett tragen, welches das zu verdrahtende Gerät identifiziert. Zusätzlich ist auf den Kabelenden der einzelnen Kabel der Name der Klemme aufgedruckt, an die das jeweilige Kabel anzuschließen ist.

Anders als bei beispielsweise Netzwerken, bei denen aktuelle Daten des Netzwerks wie beispielsweise MAC-Adressen, aktuelle Verbindungen etc., angezeigt werden können, kann ein Schaltschrank regelmäßig nicht im halbfertigen Zustand hinsichtlich seiner Funktion geprüft werden, da der Schaltschrank noch nicht unter Spannung steht und eine Schritt-für-Schritt-Prüfung nicht möglich ist, da für bestimmte Funktionen das Zusammenspiel aller Bauteile bzw. bestimmter Bauteile notwendig ist, die ggfs. jedoch noch gar nicht montiert sind. Eine automatisierte Überwachung der Montage eines Schaltschranks wird dabei zusätzlich auch noch dadurch erschwert, dass die verschiedenen Bauteile regelmäßig nicht immer in einer vorher festgelegten Reihenfolge montiert werden, sondern dem Werker beim Schaltschrankbau fertig konfigurierte Leitungen in jeweiliger Länge und mit jeweiligen Anschlagmitteln in chaotischer Reihenfolge bereitgestellt werden und der Werker dann diese jeweilige Leitung einbaut. Anders als bei Netzwerkinstallationen mit Patchkabeln, die immer gleich sind und immer gleiche Stecker aufweisen, weichen beim Schaltschrankbau zudem die zu verbauenden Kabel hinsichtlich Kabeldurchmesser, Kabeltyp bzw. Anschlagmittel voneinander ab.

Letztlich ist die Fertigung solcher Schaltschränke sehr abhängig vom jeweiligen Werker und dessen Tagesform. Es wäre deshalb hilfreich, die Montage für den Werker zu vereinfachen und dem Werker ein Hilfsmittel an die Hand zu geben, das die Fehleranzahl reduziert und ein aufwändiges Nacharbeiten vermeidet.

Die Schrift WO 2008/107021 A1 zeigt ein Augmented Reality System, das auf einer vom Werker zu tragenden Datenbrille eine Reparaturanleitung für einen Schaltschrank anzeigt. Um die Position und Blickrichtung der Datenbrille exakt bestimmen und die virtuelle Erweiterung des Blickfelds passend vornehmen zu können, werden die im Schaltschrank verbauten Schaltgeräte nacheinander durch ein Tracking Verfahren unter Verwendung einer abgespeicherten Stückliste und abgespeicherter Tracking Daten identifiziert.

Aus der Schrift DE 198 10 115 C2 ist ein Computersystem bekannt, das mittels einer digitalen Kamera Bilder eines Schaltschranks aufnimmt, in dem die Anschlussklemmen elektrischer Geräte erkennbar sind. Nach Markierung der Anschlussklemmen mittels eines Mausklicks und der Vorgabe von Streckenpunkten des gewünschten Kabelverlaufs zwischen den Anschlussklemmen ebenfalls mittels eines oder mehrerer Mausklicks berechnet das Computersystem die benötigte Kabellänge und steuert eine Kabelkonfektionierungsmaschine an, die dann ein Verdrahtungskabel der benötigten Länge abschneidet und mit Adernendhülsen versieht. Dies erleichtert zwar die Verdrahtung hinsichtlich der Fertigung der benötigten Kabel und vermeidet Materialausschuss durch Ablängen zu kurzer Verdrahtungskabel, kann jedoch die zuvor genannten Fehlerquellen wie Falschanschluss an falschen Anschlusspunkten, Nichtverdrahtung durch Vergessen einer Kabelverbindung und dergleichen nicht eliminieren.

Aus der DE 10 2008 012 122 B4 ist eine Prüfeinrichtung für Schaltschränke oder Racks bekannt, die mittels einer Kamera Bilder des montierten Schaltschranks aufnimmt und Einbaukomponenten anhand von Codemarken identifiziert. Aus einer Überwachungseinrichtung werden ferner Betriebsdaten wie Störungen, die Energiebilanz oder auch Servicehinweise abgerufen und auf einer Anzeigeeinheit für den Prüfingenieur angezeigt. Dieses System erleichtert zwar die Überprüfung und Wartung von Schaltschränken, hilft jedoch nicht bei deren Montage.

Aus der DE 10 2011 107 839 A1 ist ferner eine Prüfvorrichtung bekannt, die mittels einer Kamera und einer Bildauswerteeinrichtung die in einem Serverrack vorhandenen IT-Komponenten und deren Lage im Serverrack identifiziert.

Der vorliegenden Erfindung liegt hiervon ausgehend die Aufgabe zugrunde, ein verbessertes Montageverfahren sowie eine verbesserte Montagehilfsvorrichtung der eingangs genannten Art zu schaffen, die Nachteile des Standes der Technik vermeiden und Letzteren in vorteilhafter Weise weiterbilden. Insbesondere soll die Verdrahtung der elektrischen Bauteile einer Schaltanlage erleichtert, Fehlerquellen minimiert und ein aufwändiges Nacharbeiten vermieden werden.

Erfindungsgemäß wird die genannte Aufgabe durch ein Montageverfahren gemäß Anspruch 1 sowie eine Montagehilfsvorrichtung gemäß Anspruch 9 gelöst. Bevorzugte Ausgestaltungen der Erfindung sind Gegenstand der abhängigen Ansprüche.

Es wird unter anderem vorgeschlagen, das Montieren solcher elektrischer Schaltanlagen durch den Einsatz eines Überwachungssystems zu vereinfachen, das die verschiedenen zum Anschließen in der Schaltanlage jeweils bereitgestellten, Bauteile automatisch identifiziert, deren Soll-Anschlüsse bestimmt und auf einem Display zusammen mit einem Bild der Schaltanlage anzeigt, sowie vorzugsweise das tatsächliche Verbauen auf die richtige Anschlusssituation automatisch prüft. Erfindungsgemäß wird ein zum Anschließen in der Schaltanlage jeweils bereitgehaltenes Bauteil von einer Identifiziereinrichtung identifiziert, wobei mittels einer Anschlusspunkt-Bestimmungseinrichtung in Abhängigkeit des von der Identifiziereinrichtung identifizierten Bauteils zumindest ein Soll-Anschlusspunkt, an dem das identifizierte Bauteil anzuschließen ist, bestimmt wird, und wobei der für das jeweils identifizierte Bauteil bestimmte Anschlusspunkt auf einem Display in ein Bild der Schaltanlage eingeblendet wird.

Dabei wird ein Augmented Reality-System eingesetzt, mittels dessen auf einem Display ein Bild der Schaltanlage angezeigt und der von der Bestimmungseinrichtung für das jeweils bereitgehaltene Bauteil bestimmte Anschlusspunkt, an dem das identifizierte Bauteil anzuschließen ist, in das angezeigte Bild auf dem Display eingeblendet wird. Durch die automatische Identifizierung eines jeweils anzuschließenden Bauteils und der vom Augmented Reality-System bereitgestellten Anzeige des Anschlusspunkts des jeweils identifizierten Bauteils in dem auf dem Display gezeigten Bild der Schaltanlage wird dem Werker genau angezeigt, wo der jeweils nächste Arbeitsschritt durchzuführen ist. Hierdurch wird die Montage der Schaltanlage beträchtlich vereinfacht.

Ein solches Augmented Reality-System ist ein computergestütztes Bilddarstellungssystem, mittels dessen ein Bild der Schaltanlage mit computergenerierten Zusatzinformationen überlagert wird.

Hierbei wird vorteilhafterweise mitteils einer Überwachungsvorrichtung der tatsächliche Anschlusspunkt, an dem das Bauteil tatsächlich angeschlossen wurde, überwacht und bei Abweichen des erfassten tatsächlichen Anschlusspunkts vom Soll-Anschlusspunkt eine Fehlermeldung abgegeben wird. Durch eine solche individuelle Bauteilidentifizierung und Bestimmung der für das jeweilige, identifzierte Bauteil vorgesehenen Soll-Anschlüsse können die verschiedenartigen Bauteile in nicht vorbestimmter bzw. chaotischer oder abwechselnder Reihenfolge in dem Schaltschrank verbaut werden, ohne dass hierdurch der korrekte Aufbau der Schaltanlage und die korrekte Verbindung der Bauteile untereinander durcheinanderkäme. Gleichzeitig wird eine automatisierte Überwachung der tatsächlichen Anschlusssituationen der Bauteile ermöglicht, da aufgrund der Bauteilidentifizierung die Überwachungseinrichtung weiß, wo das jeweilige Bauteil anzuschließen ist, und insofern für die Überwachung die notwendigen Randbedingungen der zu verarbeitenden Daten reduzieren kann.

Durch die individuelle Bauteilidentifzierung können auch verschiedenartige Bauteile richtig verbaut bzw. hinsichtlich des richtigen Einbaus überwacht werden, und zwar insbesondere auch Bauteile unterschiedlichen Typs oder unterschiedlicher Gattung oder unterschiedlicher Konfektionierung wie beispielsweise Kabel mit verschiedenen Kabeldurchmessern und/oder verschiedenen Leiter- oder Litzentypen und/oder verschiedenen Anschlüssen. Auch elektronische und leistungselektronische Bauteile wie Frequenzumrichter, Steuerungselektronik oder Kondensatoren können von der Identifziereinrichtung individuell identifiziert werden, sodass von der Anschluss-Bestimmungseinrichtung auf Basis eines Signals der Identifziereinrichtung dann die Soll-Anschlussposition bestimmt und von der Überwachungseinrichtung das korrekte Anschließen überwacht werden kann.

In vorteilhafter Weiterbildung der Erfindung kann das auf dem Display angezeigte Bild der Schaltanlage ein Livebild oder auch ein aufgezeichnetes Bild sein, das von einer auf die zu montierende Schaltanlage gerichteten Kamera bereitgestellt wird. Der Vorteil der Verwendung eines Livebilds, das jeweils den aktuellen Montagezustand wiedergibt, ist ein erleichterter Abgleich zwischen tatsächlicher Realität und der im Bild angezeigten Realität, so dass sich der Werker letztlich leichter zurechtfindet. Gegebenenfalls kann das Bild aber auch zwischengespeichert oder aufgezeichnet und dem Werker zeitversetzt angezeigt werden. Alternativ oder zusätzlich zu einem von einer vorzugsweise digitalen Kamera bereitgestellten Ist-Bild der Schaltanlage kann ggf. auch ein computergeneriertes, virtuelles Bild der Schaltanlage angezeigt werden, wobei ein solches virtuelles Bild der Schaltanlage beispielsweise von einem dreidimensionalen CAD-System bereitgestellt werden kann, das die Komponenten und deren Anordnung zeigt.

Das auf dem Display angezeigte Bild kann dabei ein ständig aktuell den Ist-Zustand der Schaltanlage wiedergebendes Livebild nach Art eines Fernsehbilds sein. Alternativ kann auch ein nur in größeren Zeitabständen von beispielsweise einigen Sekunden aktualisiertes Standbild angezeigt werden, das den Ist-Zustand der Schaltanlage sozusagen einfriert und die Detailbeobachtung durch weniger Veränderungen erleichtert. Beispielsweise kann auch ein nur im Rhythmus der Arbeitsschritte aktualisiertes Standbild angezeigt werden, das zyklisch oder nach jedem erfolgten Montageschritt aktualisiert und auf dem Display angezeigt wird. Das dem Werker angezeigte Bild der Schaltanlage wird also vorteilhafterweise ständig oder zyklisch dem fortschreitenden Montagezustand der Schaltanlage angepasst. Während zu Beginn der Montage der Schaltanlage ein relativ "nacktes" Bild der Schaltanlage mit nur wenigen Grundkomponenten wie Trägerrahmen und/oder noch ohne zu montierende Bauteile angezeigt werden kann, wird mit zunehmendem Fortgang der Montage ein immer reicheres Bild der Schaltanlage angezeigt und gegen Ende des Montagevorgangs ein Bild der Schaltanlage mit immer mehr Bauteilen und Verbindungen untereinander angezeigt. Das genannte Anpassen des angezeigten Bilds an den fortschreitenden Montagezustand kann in der genannten Weise durch Anzeigen eines Live-Bilds oder eines gespeicherten, zuvor aufgenommenen Echtbilds realisiert sein. Alternativ oder zusätzlich kann das Bild, beispielsweise ein computergeneriertes Schaltplanbild und/oder ein durch eine Kamera aufgenommenes Bild, in Abhängigkeit der identifizierten und montierten Bauteile nach und nach verändert werden, beispielsweise dergestalt, dass bei richtig montierten Bauteilen diese computergestützt in das anzuzeigende Bild eingebaut werden. Das dem Werker angezeigte Bild verändert sich somit vorteilhafterweise und ist an den tatsächlichen Zustand des Schaltschranks angepasst.

Das genannte Bild der Schaltanlage, in das die zu montierenden elektrischen bzw. elektronischen Komponenten und deren Anschlusspunkte eingeblendet werden, kann grundsätzlich auf verschiedenen Displays angezeigt werden. Beispielsweise kann als Display ein neben dem Schaltschrank stehender Bildschirm oder ein zumindest in der Nachbarschaft zur Schaltanlage positionierter Bildschirm verwendet werden, auf dem das genannte Bild angezeigt wird.

In vorteilhafter Weiterbildung der Erfindung kann das Bild der Schaltanlage auch auf einer Datenbrille angezeigt werden, die der jeweilige Werker beim Montieren tragen kann. Eine solche Datenbrille kann beispielsweise ein im Bereich eines üblichen Brillenglases positionierbares Display umfassen, welches beispielsweise am Brillenrahmen verschwenkbar gelagert sein kann, um vor das Auge oder vom Auge weggeschwenkt werden zu können. Alternativ oder zusätzlich kann das Display auch nach Art eines Head-up-Displays arbeiten, das das Bild auf das Brillenglas projizieren kann, durch das der Werker hindurchsehen kann. Solche Datenbrillen sind per se bekannt und beispielsweise in den Schriften DE 20 2012 003 317 U1 oder DE 20 2012 003 332 U1 beschrieben, auf die insoweit bezüglich der Ausbildung der Datenbrille verwiesen werden darf.

Um die Anschlusspunkte der anzuschließenden Bauteile und deren Soll-Position in dem Bild der Schaltanlage anzeigen zu können, weist das genannte Augmented Reality-System bzw. das computergestützte Bildgenerierungssystem eine CAD-Schnittstelle auf, um die Anschlusspunkte der zu verdrahtenden bzw. anzuschließenden elektrischen Bauteile und deren Sollposition in der elektrischen Schaltanlage aus einem Elektro-CAD-System zu entnehmen, an das das Augmented Reality-System angebunden ist. Ein solches E-CAD-System kann beispielsweise den Schaltplan der zu verdrahtenden Schaltanlage speichern oder insbesondere auch das E-CAD-System sein, auf dem die Schaltanlage und/oder deren Schaltplan generiert wurde. Alternativ oder zusätzlich zu einer direkten Anbindung an das genannte E-CAD-System kann dem Augmented Reality-System auch ein CAD-Datensatz zugeführt werden, der die Schaltanlage und/oder deren Schaltplan wiedergibt, wobei ein solcher CAD-Datensatz beispielsweise ein Speichermittel wie eine CD-ROM oder einen USB-Stick oder in anderer Weise zugeführt werden kann, wofür das Augmented Reality-System eine entsprechende Schnittstelle aufweisen kann.

Vorteilhafterweise kann mittels des Augmented Reality-Systems bzw. dessen Einblendvorrichtung in das auf dem Display angezeigte Bild der Schaltanlage nicht nur der Anschlusspunkt eines Bauteils, sondern auch dessen Position und/oder dessen Ausrichtung und/oder dessen Montagestellung in der Schaltanlage angezeigt bzw. eingeblendet werden, so dass ein Werker auch sehen kann, wo genau in der Schaltanlage das jeweilige Bauteil zu positionieren und zu montieren ist. Dabei kann die von der Kamera aufgenommene Ist-Position und/oder Ist-Ausrichtung des Bauteils und/oder die Ist-Position dessen Anschlusspunkts auf dem Display mit der entsprechenden Soll-Position und/oder Soll-Ausrichtung, die aus dem E-CAD-System gewonnen oder der genannten E-CAD-Datei entnommen werden kann, überblendet werden, um Abweichungen der montierten Ist-Position bzw. Ist-Ausrichtung mit der Soll-Position bzw. Soll-Ausrichtung zu verdeutlichen. Die Identifiziereinrichtung zum Identifizieren eines jeweils anzuschließenden Bauteils kann grundsätzlich verschieden ausgebildet sein. Beispielsweise kann das zu identifizierende Bauteil anhand einer am Bauteil angebrachten Markierung beispielsweise in Form eines Strichcodes und/oder eines Buchstaben- oder Zahlencodes und/oder eines anderen Zeichencodes und/oder einer geometrischen Formmarkierung identifiziert werden. Beispielsweise kann die Identifiziereinrichtung hierzu einen Barcodeleser aufweisen.

Insbesondere kann das zu verdrahtende Bauteil auch mittels einer Bildauswerteeinrichtung identifiziert werden, die das Bauteil anhand seiner Kontur und/oder Größe und/oder Farbe und/oder Oberflächenbeschaffenheit wie Licht reflektierend, verspiegelt etc. identifizieren kann. Insbesondere kann die Bildauswerteeinrichtung dabei die Bilddaten auswerten, die von der die Schaltanlage beobachtenden Kamera bereitgestellt werden.

Alternativ oder zusätzlich kann ein jeweiliges Bauteil auch anhand seiner Anschlagmittel wie Aderendhülsen und/oder der Abmessungen seiner Haupterstreckungsachsen und/oder seines Durchmessers und/oder seiner Geometrie von der Identifiziereinrichtung identifiziert werden.

Hierdurch wird es in Weiterbildung der Erfindung ermöglicht, dass der Werker ein jeweils zu montierendes Bauteil einfach in den Schaltschrank bzw. in das Kamerafeld der die Schaltanlage beobachtenden Kamera bzw. in den Scanbereich einer Scaneinrichtung hält, bevor das Bauteil tatsächlich verdrahtet wird. Die Bildauswerteeinheit kann dann in dem von der Kamera bereitgestellten Bild das dort gezeigte Bauteil anhand eines der vorgenannten Kriterien wie beispielsweise einem Strichcode oder dergleichen identifizieren.

In Weiterbildung der Erfindung kann mit Hilfe des Augmented Reality-Systems auch eine Überwachung einzelner oder aller Montageschritte vorgenommen werden. Hierbei kann das von der Kamera des Augmented Reality-Systems aufgenommene Ist-Bild der Verdrahtung und der Anordnung der Komponenten mit der Soll-Verdrahtung und der Soll-Anordnung der Komponenten, wie sie aus dem E-CAD-System gewonnen werden kann, verglichen werden. Hierzu identifiziert die Bildauswerteeinrichtung in dem Kamerabild die einzelnen Bauteile, beispielsweise anhand des vorgenannten Barcodes, und die daran angeschlossenen Leitungen bzw. die Anschlussstellen, an denen das identifizierte Bauteil angeschlossen wurde. Weichen die identifizierten Anschlusspunkte und/oder Verdrahtungsverläufe von dem Soll-Zustand gemäß Schaltplan, wie er aus dem E-CAD-System oder auch durch ein vorausgehendes Teach-In-Verfahren gewonnen werden kann, ab, kann eine Fehlermeldung ausgegeben und auf dem am Display angezeigten Kamerabild die entsprechende Fehlerstelle markiert werden.

Neben der kompletten Verdrahtung können von der Überwachungseinrichtung auch Teilschritte des Montageprozesses überwacht werden. So kann beispielsweise beim Aufbringen einer Aderendhülse überwacht werden, ob eine Leitung mit richtigem Querschnitt und/oder auf die richtige Länge abisoliert wurde und/oder ob die Aderendhülse richtig gecrimpt wurde.

Alternativ oder zusätzlich kann die Überwachungseinrichtung überwachen, ob bei einem Montageschritt das jeweils richtige Werkzeug verwendet wird, beispielsweise der richtige Schraubenschlüssen zum Anziehen von Schrauben. Alternativ oder zusätzlich kann überwacht werden, ob eine Leitung in der richtigen Farbe und/oder mit dem richtigen Querschnitt verlegt wird. Alternativ oder zusätzlich kann auch das richtige Anschlagen von Aderenden überwacht werden.

Alternativ oder zusätzlich kann die Überwachungseinrichtung auch Fehlbestückungen überwachen und erkennen. Wird beispielsweise ein Bauteil nicht an seinem gemäß Schaltplan vorgegebenen Platz gefunden bzw. identifiziert, kann eine Fehlermeldung angezeigt werden, beispielsweise durch Abbildung eines Fehlersymbols an der fehlbestückten Position im Kamerabild.

In Weiterbildung der Erfindung kann mittels des genannten Augmented Reality-Systems auch die Montage bzw. Fertigung dokumentiert werden, beispielsweise bei sicherheitskritischen Bauteilen, um später einen entsprechenden Produktfunktionsnachweis führen zu können.

Alternativ oder zusätzlich können in Weiterbildung der Erfindung auch Hilfen für den Werker bei Bedarf angezeigt werden, beispielsweise auf dem genannten Display. Derartige Hilfen können beispielsweise Texte umfassen, die eingeblendet werden, oder Videos sein, die auf dem Display abgespielt werden können.

Die Erfindung wird nachfolgend anhand eines Ausführungsbeispiels und zugehöriger Zeichnungen näher erläutert. In den Zeichnungen zeigen:
- Fig. 1:: eine schematische Darstellung eines zu montierenden Schaltschranks und der den Werker unterstützenden Montagehilfsvorrichtung umfassend ein Augmented Reality-System,
- Fig. 2:: eine schematische Darstellung einer Datenbrille mit integriertem Display, auf dem das Augmented Reality-System aus Fig. 1 dem Werker ein Kamerabild und darin eingeblendete Montagehilfen anzeigen kann, und
- Fig. 3:: eine schematische ausschnittsweise Darstellung des Kamerabilds eines zu verdrahtenden Bauteils mit einem darin eingeblendeten Montagehilfspfeil, der den aktuell zu montierenden Anschlusspunkt identifiziert.

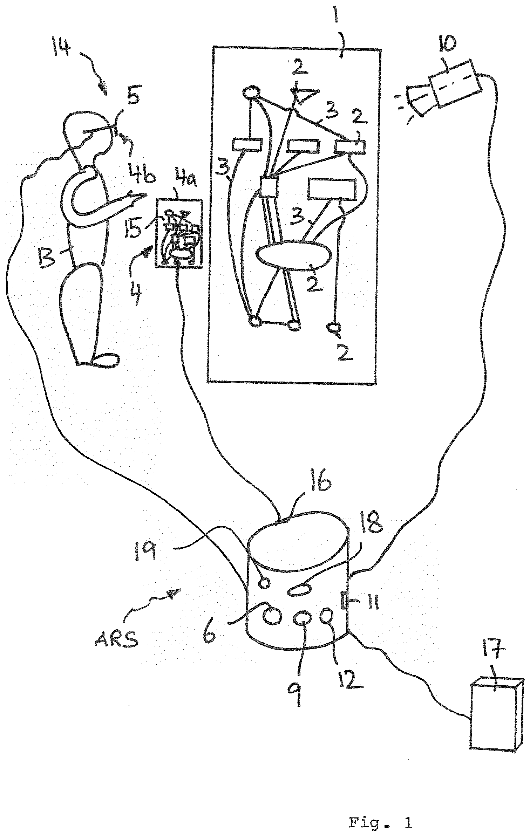

Wie Fig. 1 zeigt, kann die zu montierenden Schaltanlage 1 beispielsweise ein Schaltschrank sein, in dem diverse elektrische bzw. elektronische Bauteile 2 beispielsweise in Form von Leistungselektronikkomponenten wie Frequenzumrichtern und steuerungstechnische Bausteine wie Signalgeber, Schaltungsblöcke und dergleichen zu montieren und miteinander durch Kabel 3 zu verdrahten sind. Die elektrischen Bauteile 2 können hierbei jeweils zumindest einen oder auch mehrere Anschlusspunkte 7 umfassen, an denen die elektrischen Bauteile zu verdrahten sind. Anstelle der dargestellten Kabel 3 kann die Verdrahtung auch durch Anschließen an Leiterplatten, Montageplatinen und dergleichen erfolgen, in denen entsprechende Verdrahtungsleitungen integriert sein können.

Um dem Werker 13 die Montage zu erleichtern, umfasst die Montagehilfsvorrichtung 14 ein Augmented Reality-System ARS, das dem Werker 13 ein Bild 15 der Schaltanlage 1 anzeigt und darin computergestützt Informationen in Form von Symbolen, Markierungen, Schriftzeichen, Videos und dergleichen einblendet, die Montageanweisungen enthalten können, Anschlusspunkte identifizieren können, Soll-Positionen und Soll-Ausrichtungen der elektrischen Bauteile anzeigen können oder andere für die Montage hilfreiche Informationen umfassen können.

Wie Fig. 1 zeigt, kann das Augmented Reality-System ARS zumindest eine Kamera 10 umfassen, die die Schaltanlage 1 beobachtet und ein Ist-Bild der Schaltanlage 1 bereitstellt. Von einem Server oder einem Rechner 16 des Augmented Reality-Systems ARS wird das Kamerabild auf zumindest einem Display 4 angezeigt. Dieses Display 4 kann einen neben der Schaltanlage 1 installierten Bildschirm 4a umfassen.

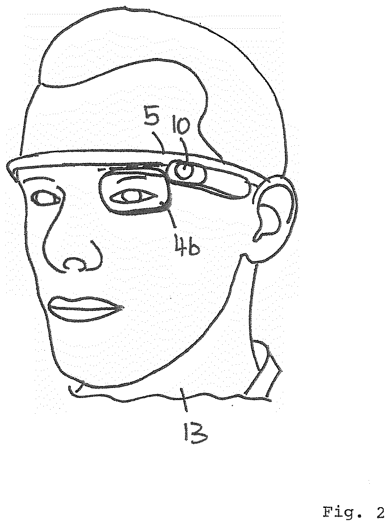

Alternativ oder zusätzlich kann das Display 4 auch ein in eine Datenbrille 5 integriertes Brillendisplay 4b aufweisen, vgl. Fig. 2, das beispielsweise nach Art eines Projektors bzw. eines Head-up-Displays die darzustellenden Bilder und Informationen auf einem Brillenglas bzw. einer brillenglasähnlichen Bildschirmfläche anzeigen kann, die vor ein Auge des Werkers 13 positionierbar ist, beispielsweise auch wegklappbar sein kann, um auch einen freien Blick auf die vorzunehmende Arbeit zu gestatten.

Wie Fig. 2 zeigt, kann in die genannte Datenbrille 5 auch die genannte oder eine weitere Kamera 10 integriert sein, die ebenfalls Teil des Augmented Reality-Systems ARS sein kann bzw. an den genannten Rechner 16 angebunden werden kann, um mit einzublendenden Zusatzinformationen überlagert zu werden, die dann wiederum auf einem der Displays 4a oder 4b dargestellt werden.

Wie Fig. 1 zeigt, ist der Rechner 16 des Augmented Reality-Systems ARS an ein E-CAD-System 17 angebunden, aus dem Informationen über die zu verdrahtenden Bauteile 2, deren Anschlusspunkte, deren Soll-Position und deren Soll-Ausrichtung in der Schaltanlage 1 und/oder insbesondere auch deren Schaltplan bzw. Verdrahtungsplan gewonnen werden können.

Hierzu kann das Augmented Reality-System ARS bzw. das Montage-Hilfs-System zunächst ein in der Schaltanlage 1 zu verbauendes Bauteil 2 mittels einer Identifiziereinrichtung 6 identifizieren. Dabei kann eine Bildauswerteeinrichtung 9 und/oder eine Scaneinrichtung bzw. eine andere Leseeinrichtung vorgesehen sein, die eine Markierung 8 an dem Bauteil 2, beispielsweise in Form eines Barcodes, auswerten kann. Wird in den von der Kamera 10 bereitgestellten Bilddaten ein solcher Barcode bzw. eine solche Markierung 8 erkannt, kann das Bauteil 2 identifiziert werden, durch Rückgriff auf das E-CAD-System 17, in dem zu dem erkannten Barcode entsprechende Informationen zugeordnet abgelegt sind. Alternativ oder zusätzlich zu einer solchen Erkennung anhand eines Barcodes oder einer Markierung, kann die Identifiziereinrichtung 6 ein Bauteil 2 auch anhand dessen Form und/oder Konturierung und/oder Farbe oder anderen Charakteristika identifizieren.

Beispielsweise kann mittels der genannten Bildauswerteeinrichtung 9 ein anzuschließendes Kabel anhand des Kabeldurchmessers und/oder der Kabelmantelfarbe und/oder der Kabelmantelmusterung und/oder der Kabellänge und/oder der Kabelendstücke und/oder der Kabelanschlussstücke und/oder einer Kabelmarkierung von der Identifiziereinrichtung erkannt werden. Gegebenenfalls kann auch auf spezielle Markierungen wie Barcodes oder Ziffernfolgen verzichtet und das Kabel anhand der anderen genannten Kriterien erkannt werden, sodass bei der Konfektionierung keine speziellen, individuellen Kabelmarkierungen anzubringen sind. Andere Bauteile des Schaltschranks wie beispielsweise dessen leistungselektronischen Komponenten wie Frequenzumrichter, oder Signalgeber und Schaltungsblöcke können von der Bildauswerteeinrichtung 9 beispielsweise anhand der Abmessungen der Haupterstreckungsachsen und/oder der Umrisskontur und/oder der Farbe und/oder der Oberflächenstruktur und/oder der Oberflächenmusterung identifiziert werden.

Ist das jeweils zum Anschließen bereitgehaltene Bauteil identifiziert, können dessen Anschlusspunkte und/oder Positionierung im Schaltschrank ermittelt werden. Eine Anschlusspositions-Bestimmungseinrichtung 19 kann in Abhängigkeit eines Signals der Identifziereinrichtung 6, welches das Bauteil 2 identifziert, die genannten Anschlusspunkte bestimmen, beispielsweise durch Rückgriff auf das genannte E-CAD-System 17, in dem die Verdrahtung des Schaltschranks bzw. die Anschlusspunkte der Bauteile 2 abgelegt sein können.

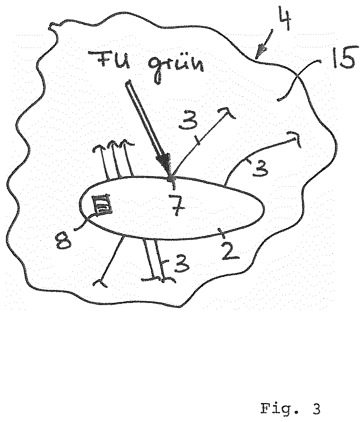

Wie Fig. 3 zeigt, kann dann in das auf dem Display 4 angezeigte Bild eines Bauteils 2 eine Zusatzanweisung eingeblendet werden, die beispielsweise einen Anschlusspunkt 7 angibt, im dargestellten Beispiel den Anschlusspunkt 7 für einen grünen Draht 3, der zu einem Frequenzumrichter gehen soll, was durch das Pfeilsymbol und das zugeordnet eingeblendete Kurzsymbol "FU grün" verdeutlicht wird.

Auf diese Weise kann nacheinander jeder Montageschritt auf dem Display 4 dargestellt werden, wobei nach einem erfolgten Montageschritt auch überprüft werden kann, ob ein richtiges Kabel - beispielsweise mit richtigem Durchmesser und/oder richtiger Farbe und/oder richtigem Kabeltyp - am richtigen Anschlusspunkt angeschlossen worden ist.

Hierzu kann eine Überwachungsvorrichtung 18 ein nach dem Montageschritt aufgenommenes Kamerabild und die hieraus gewonnenen Ist-Informationen über den Ist-Zustand mit den aus dem E-CAD-System 17 gewonnenen Soll-Informationen abgleichen, wobei bei Abweichungen, die einen bestimmten Schwellwert beispielsweise hinsichtlich Position überschreiten oder von anderen digitalen Referenzdaten in Form von Soll-Charakteristika abweichen, eine Fehlermeldung ausgeben kann, die dann wiederum am Display 4 dem Werker 13 angezeigt werden kann. Insbesondere kann die genannte Überwachungsvorrichtung 18 die tatsächlichen Anschlusspunkte eines Bauteils 2 mit dessen Soll-Anschlusspunkten, die von der Bestimmungseinrichtung 19 auf Basis eines Signals der Identifziereinrichtung 6 bestimmt wurden, abgleichen und ggfs. eine Fehlermeldung ausgeben, wenn die tatsächlichen Anschlusspunkte nicht mit den Soll-Anschlusspunkten übereinstimmen.

Die genannte, automatisierte individuelle Bauteilerkennung durch die Identifiziereinrichtung 6 im Zusammenspiel mit der automatisierten Bestimmung der Anschlusspunkte durch die Bestimmungseinrichtung 19 und der Überwachungsvorrichtung 18 erlaubt es, dass der Werker die Datenbrille 5 auch zeitweise ablegt und die Montage ohne Augmented Reality ausführt, ohne dass hierdurch die Verkabelung des Schaltschranks durcheinanderkommen könnte. Das Ablegen der Datenbrille 5 gestattet ein angenehmeres, ermüdungsfreieres Arbeiten, gleichzeitig wird jedoch eine korrekt ausgeführte Montage sichergestellt.

## Patentansprüche

1. Verfahren zum Montieren von elektrischen Schaltanlagen (1), bei dem elektrische Bauteile (2) verdrahtet und/oder miteinander verbunden werden, wobei die Schaltanlage (1) aus einer Vielzahl von verschiedenen Bauteilen (2) in vorher nicht festgelegter und/oder abwechselnder Reihenfolge nach und nach aufgebaut wird, **dadurch gekennzeichnet, dass** mittels einer Identifiziereinrichtung (6) ein zum Anschließen in der Schaltanlage (1) jeweils bereitgehaltenes Bauteil (2), das vor dem Anschließen in den Scanbereich einer Scaneinrichtung oder das Kamerafeld einer Kamera gehalten wird, durch Auswerten einer eingescannten Markierung oder Auswerten von Bilddaten des Kamerabilds durch eine Bildauswerteeinrichtung (9) identifiziert wird, dass mittels einer Anschlußpunkt-Bestimmungseinrichtung (19) aus einem Elektro-CAD-System und/oder CAD-Datensatz, der die Schaltanlage und/oder deren Schaltplan wiedergibt, in Abhängigkeit des von der Identifiziereinrichtung (6) identifizierten Bauteils (2) zumindest ein Soll-Anschlusspunkt (7), an dem das identifizierte Bauteil (2) anzuschließen ist, bestimmt wird, und dass mittels eines Augmented Reality-Systems (ARS) auf einem Display (4) ein Bild der Schaltanlage (1) angezeigt und der von der Bestimmungseinrichtung (19) für das bereitgehaltenen Bauteil (2) jeweils bestimmte Anschlusspunkt (7), an dem das identifizierte Bauteil (2) anzuschließen ist, in das angezeigte Bild auf dem Display (4) eingeblendet wird.

2. Verfahren nach dem vorhergehenden Anspruch, wobei von dem Augmented Reality-System (ARS) auch eine Soll-Montagestellung und/oder eine Soll-Position des identifizierten Bauteils (2) in der Schaltanlage (1) in das angezeigte Bild auf dem Display (4) eingeblendet wird.

3. Verfahren nach einem der vorhergehenden Ansprüche, wobei das auf de Display anzuzeigende Bild der Schaltanlage auf einer vom Werker zu tragenden Datenbrille (11) als Livebild angezeigt und von einer an der Datenbrille (11) vorgesehenen Kamera (10) aufgenommen wird.

4. Verfahren nach einem der vorhergehenden Ansprüche, wobei das auf dem Display angezeigte Bild der Schaltanlage (1) kontinuierlich oder zyklisch an den Montage-Ist-Zustand der Schaltanlage angepasst wird, wobei mit fortschreitender Montage in dem Bild der Schaltanlage (1) nach und nach mehr Bauteile (2) und deren Verbindung untereinander angezeigt werden, wobei vorzugsweise die Anpassung des angezeigten Bilds in Abhängigkeit der von der Identifzierungseinrichtung (6) identifizierten Bauteile und/oder in Abhängigkeit der von der Überwachungsvorrichtung (18) überwachten Anschlussvorgänge gesteuert wird.

5. Verfahren nach einem der vorhergehenden Ansprüche, wobei das jeweils zum Anschliessen bereitgehaltene Bauteil (2) von der Identifiziereinrichtung (6) anhand einer am Bauteil (2) angebrachten Markierung (8), in Form eines Strich- oder Zeichencodes, und/oder anhand einer Farbe des Bauteils (2) und/oder eines Durchmessers des Bauteils (2) und/oder einer Abmessung zumindest einer Haupterstreckungsachse und/oder eines Geometriemaßes des Bauteils (2), identifiziert wird.

6. Verfahren nach einem der vorhergehenden Ansprüche, wobei mittels einer Überwachungsvorrichtung (18) der tatsächliche Anschlußpunkt, an dem das Bauteil (2) tatsächlich angeschlossen wurde, überwacht und bei Abweichen des erfaßten tatsächlichen Anschlußpunkts vom Soll-Anschlußpunkt (7) eine Fehlermeldung abgegeben wird, wobei von der Überwachungsvorrichtung (18) vorzugsweise zumindest ein während und/oder nach einem Montageschritt bereitgestelltes Bild der Schaltanlage (1) mittels einer Bildauswerteeinrichtung (9) ausgewertet wird, wobei ein von der Bildauswerteeinrichtung (9) identifiziertes Bauteil (2) hinsichtlich seiner aus dem Bild gewonnenen Ist-Position und/oder Ist-Ausrichtung und/oder Ist-Verdrahtung mit einer von der Anschluß-Bestimmungseinrichtung (19) für das identifizerte Bauteil (2) bereitgestellten Soll-Position und/oder Soll-Ausrichtung und/oder Soll-Verdrahtung verglichen wird, wobei bei einer Abweichung bei dem genannten Soll-Ist-Vergleich eine Fehlermeldung ausgegeben wird.

7. Verfahren nach dem vorhergehenden Anspruch, wobei von der Überwachungsvorrichtung (18) zumindest einer der folgenden Überwachungsschritte ausgeführt wird:
- Beim Aufbringen einer Aderendhülse, Überwachung, ob eine Leitung mit richtigem Querschnitt und/oder auf die richtige Länge abisoliert und/oder eine Aderendhülse richtig gecrimpt wurde;
- Überwachung der Verwendung eines vorbestimmten Werkzeugs;
- Überwachung der Verlegung einer Leitung in einer vorbestimmten Farbe und/oder mit einem vorbestimmten Querschnitt;
- Überwachung des Anschlagens von Aderenden in vorbestimmter Weise;
- Überwachung von Fehlbestückungen;
- Überwachung der Montage eines Bauteils (2) an einem vorbestimmten Platz der Schaltanlage (1).

8. Verfahren nach einem der vorhergehenden Ansprüche, wobei als Schaltanlage (1) ein Schaltschrank montiert wird, in den verschiedene elektronische und leistungselektronische Bauteile (2) wie Frequenzumrichter, Kondensatoren und Signalgeberbausteine, einerseits und verschiedene Kabel mit unterschiedlichen Kabeldurchmessern andererseits verbaut werden.

9. Montagehilfsvorrichtung zum Erleichtern der korrekten Montage von elektrischen Schaltanlagen (1), die aus einer Vielzahl von verschiedenen Bauteilen (2) in vorher nicht festgelegter Reihenfolge nach und nach aufgebaut werden, mit einer Identifiziereinrichtung (6) zum Identifizieren eines zum Anschließen in der Schaltanlage (1) jeweils bereitgehaltenen Bauteils (2), wobei die Identifiziereinrichtung (6) einen Codeleser (12) zum Lesen einer auf einem zu montierenden Bauteil (2) angebrachten Markierung (8) und/oder eine Bildauswerteeinrichtung (9) zum Auswerten eines Kamerabilds des in den Kamerabereich gehaltenen Bauteils (2) und Identifizieren des Bauteils aus der eingelesenen Markierung und/oder den ausgewerteten Bilddaten aufweist, einer Anschlußpunkt-Bestimmungseinrichtung (19) zum Bestimmen zumindest eines Soll-Anschlusspunkts (7), an dem das identifizierte Bauteil (2) anzuschließen ist, in Abhängigkeit eines Signals der Identifiziereinrichtung (6), aus einem Elektro-CAD-System und/oder einem CAD-Datensatz, der die Schaltanlage und/oder deren Schaltplan wiedergibt, und einem Augmented Reality-System (ARS) umfassend ein Display (4) zum Anzeigen eines Bilds der Schaltanlage (1) und einer Einblendvorrichtung zum Einblenden des zumindest einen Anschlusspunkts (7) des identifizierten Bauteils (2) in das auf dem Display (4) angezeigte Bild der Schaltanlage (1).

10. Montagehilfsvorrichtung nach dem vorhergehenden Anspruch, wobei eine auf die zu montierende Schaltanlage (1) gerichtete Kamera (10) zum Bereitstellen des auf dem Display (4) anzuzeigenden Bilds als Livebild vorgesehen ist, wobei das Display (4) und die Kamera (10) in eine vom Werker zu tragende Datenbrille (11) integriert sind.

11. Montagehilfsvorrichtung nach einem der vorhergehenden Ansprüche, wobei das Augmented Reality-System (ARS) eine CAD-Datenschnittstelle aufweist und an ein Elektro-CAD-System, in dem die Schaltanlage (1) und/oder deren Schaltplan generierbar und/oder speicherbar ist, anschließbar ist.

12. Montagehilfsvorrichtung nach einem der vorhergehenden Ansprüche, wobei die Identifiziereinrichtung (6) einen Barcodeleser aufweist.

13. Montagehilfsvorrichtung nach einem der vorhergehenden Ansprüche, wobei eine Überwachungsvorrichtung (18) zum Überwachen des tatsächliche Anschlußpunkts, an dem das Bauteil (2) tatsächlich angeschlossen wurde, und Bereitstellen einer Fehlermeldung bei Abweichen des erfaßten tatsächlichen Anschlußpunkts vom Soll-Anschlußpunkt (7) vorgesehen ist, wobei die Überwachungsvorrichtung (18) vorzugsweise eine Bildauswerteeinrichtung (9) zum Auswerten zumindest eines während und/oder nach einem Montageschritt aufgenommenen Bilds aufweist und eine Vergleichsvorrichtung zum Vergleichen von durch die Bildauswertung gewonnenen Informationen betreffend eine Ist-Position und/oder eine Ist-Ausrichtung und/oder eine Ist-Verdrahtung eines identifizierten Bauteils (2) mit einer Soll-Position und/oder einer Soll-Ausrichtung und/oder einer Soll-Verdrahtung aufweist.

14. Montagehilfsvorrichtung nach dem vorhergehenden Anspruch, wobei ein Fehlermelder zum Einblenden einer Fehlermeldung in das auf dem Display (4) dargestellte Bild in Abhängigkeit eines Signals der Vergleichseinrichtung vorgesehen ist.

## Claims

1. Method of assembling electrical switching systems (1) in which electrical components (2) are wired and/or connected to one another, wherein the switching system (1) is set up gradually from a plurality of different components (2) in a previously non-fixed and/or alternating order, **characterized in that** a component respectively provided for connection in the switching system (1) and held into the scanning range of a scanning device or into the camera field of a camera before connection, is identified by means of an identification device (6) by evaluation of a scanned mark or evaluation of image date of the camera image by means of an image evaluation device (9), **in that** at least one desired connector point (7) to which the identified component (2) is to be connected is determined by means of a connector point determination device (19) from an electrical CAD system and/or a CAD data record that represents the switching system and/or its circuit diagram, in dependence on the component (2) identified by the identification device (6), and **in that** an image of the switching system (1) is displayed on a display (4) by means of an augmented reality system (ARS) and the connector point (7) to which the identified component (2) is to be connected and which is respectively determined by the determination device (19) for the provided component (2) is superimposed in the displayed image on the display (4).

2. Method in accordance with the preceding claim, wherein a desired assembly position and/or a desired position of the identified component (2) in the switching system (1) is also superimposed in the displayed image on the display (4) by the augmented reality system (ARS).

3. Method in accordance with one of the preceding claims, wherein the image of the switching system is displayed on smart-glasses (11) to be worn by the workman as a live image, and is recorded by a camera (10) provided at the smart-glasses (11).

4. Method in accordance with one of the preceding claims, wherein the image of the switching system (1) displayed on the display is continuously or cyclically adapted to the actual assembly status of the switching system, wherein, as the assembly progresses, more components (2) and their connections to one another are gradually displayed in the image of the switching system (1), wherein the adaptation of the displayed image preferably is controlled in dependence on the components identified by the identification device (6) and/or in dependence on the connection procedures monitored by the monitoring apparatus (18).

5. Method in accordance with one of the preceding claims, wherein the respective component (2) provided for connection is identified by the identification device (6) based upon a mark (8) applied to the component (2), in the form of a barcode or character code, and/or based upon a color of the component (2) and/or a diameter of the component (2) and/or a dimension of at least one main axis of extent and/or to a geometrical measure of the component (2).

6. Method according to one of the preceding claims, wherein the actual connector point to which the component (2) was actually connected is monitored by means of a monitoring device (18) and an error message is output in the event of a deviation of the detected actual connector point from the desired connector point (7), wherein at least one image of the switching system (1) provided during and/or after an assembly step is evaluated by the monitoring device (18) by means of an image evaluation device (9), wherein a component (2) identified by the image evaluation device (9) is compared with respect to its actual position and/or its actual orientation and/or its actual wiring acquired from the image with a desired position and/or desired orientation and/or desired wiring provided by the connector determination device (19) for the identified component (2), wherein an error message is output on a deviation in said desired/actual comparison.

7. Method in accordance with the preceding claim, wherein at least one of the following monitoring steps is carried out by the monitoring device (18):
- on the attachment of a wire ferrule, monitoring whether a lead having the correct cross-section was insulated and/or insulated to the correct length and/or whether a wire ferrule was correctly crimped;
- monitoring the use of a predefined tool;
- monitoring the laying of a lead in a predefined color and/or having a predefined cross-section;
- monitoring the fitting of conductor ends in a predefined manner;
- monitoring incorrect mountings; and
- monitoring the assembly of a component (2) at a predefined position of the switching system (1).

8. Method in accordance with one of the preceding claims, wherein a switch cabinet is assembled as the switching system (1) in which various electronic and power electronic components (2) such as frequency converters, capacitors, and signal generator modules, on the one hand, and various cables having different cable diameters, on the other hand, are installed.

9. Auxiliary assembly apparatus for facilitating the correct assembly of electric switching systems (1) that are gradually built up from a plurality of different components (2) in a non-fixed order, comprising an identification device (6) for identifying a component (2) respectively provided for connection in the switching plant (1); wherein the identification device (6) comprises a code reader (12) for reading a mark (8) applied to a component (2) to be assembled, and/or an image evaluation device (9) for evaluating a camera image of the component (2) held into the camera range and for identifying the component from a read mark and/or evaluated image data, a connector point determination device (19) for determining at least one desired connector point (7) to which the identified component (2) is to be connected in dependence on a signal of the identification device (6) from an electrical CAD system and/or a CAD data record that represents the switching system and/or its circuit diagram, and an augmented reality system (ARS) comprising a display (4) for displaying an image of the switching system (1) and a superimposition device for superimposing the at least one connector point (7) of the identified component (2) in the image of the switching system (1) displayed on the display (4)

10. Auxiliary assembly apparatus in accordance with the preceding claim, wherein a camera (10) directed to the switching system (1) is provided for providing the image to be displayed on the display (4) as a live image, wherein the display (4) and the camera (10) are integrated in smartglasses (11) to be worn by the workman.

11. Auxiliary assembly apparatus in accordance with one of the preceding claims, wherein the augmented reality system (ARS) comprises a CAD data interface and is connectable to an electrical CAD system in which the switching system (1) and/or its circuit diagram can be generated and/or stored.

12. Auxiliary assembly apparatus in accordance with one of the preceding claims, wherein the identification device (6) comprises a barcode reader.

13. Auxiliary assembly apparatus in accordance with one of the preceding claims, wherein a monitoring apparatus (18) for monitoring the actual connector point to which the component (2) has actually been connected, and providing an error message on a deviation of the detected actual connector point from the desired connector point (7), is provided, wherein the monitoring apparatus (18) preferably comprises an image evaluation device (9) for evaluating at least one image recorded during and/or after an assembly step and comprises a comparison apparatus for comparing information acquired by the image evaluation relating to an actual position and/or to an actual orientation and/or to an actual wiring of an identified component (2) with a desired position and/or a desired orientation and/or a desired wiring.

14. Auxiliary assembly apparatus in accordance with the preceding claim, wherein an error alarm is provided for superimposing an error message in the image shown on the display (4) in dependence on a signal of the comparison device.

## Revendications

1. Procédé servant au montage d'installations de commutation (1) électriques, où des composants (2) électriques sont câblés et/ou reliés les uns aux autres, dans lequel l'installation de commutation (1) est élaborée peu à peu à partir d'une pluralité de composants (2) différents dans un ordre non fixé à l'avance et/ou alternant, **caractérisé en ce qu'**un composant (2) fourni respectivement pour être raccordé dans l'installation de commutation (1), qui est maintenu avant le raccordement dans la zone de balayage d'un système de balayage ou dans le champ de caméra d'une caméra, est identifié par un système d'évaluation d'image (9) en évaluant un marquage pratiqué par balayage ou en évaluant des données d'image de l'image de caméra au moyen d'un système d'identification (6), qu'au moins un point de raccordement théorique (7), auquel le composant (2) identifié est à raccorder, est défini au moyen d'un système de définition de point de raccordement (19) à partir d'un système électrique CAD et/ou d'un jeu de données CAD, qui reproduit l'installation de commutation et/ou son plan de commutation, en fonction du composant (2) identifié par le système d'identification (6), et qu'une image de l'installation de commutation (1) est affichée au moyen d'un système de réalité augmentée (ARS) sur un écran (4) et le point de raccordement (7) respectivement défini par le système de définition (19) pour le composant (2) fourni, auquel le composant (2) identifié est à raccorder, est incrusté dans l'image affichée sur l'écran (4).

2. Procédé selon la revendication précédente, dans lequel également une position de montage théorique et/ou une position théorique du composant (2) identifié sont incrustées dans l'installation de commutation (1) dans l'image affichée sur l'écran (4) par le système de réalité augmentée (ARS).

3. Procédé selon l'une quelconque des revendications précédentes, dans lequel l'image, à afficher sur l'écran, de l'installation de commutation est affichée en tant qu'image en direct sur des lunettes intelligentes (11) à porter par l'opérateur et est prise par une caméra (10) prévue au niveau des lunettes intelligentes (11).

4. Procédé selon l'une quelconque des revendications précédentes, dans lequel l'image, affichée sur l'écran, de l'installation de commutation (1) est adaptée en continu ou de manière cyclique à l'état réel de montage de l'installation de commutation, dans lequel peu à peu davantage de composants (2) et leur connexion entre eux sont affichés avec un montage progressif sur l'image de l'installation de commutation (1), dans lequel de préférence l'adaptation de l'image affichée est commandée en fonction des composants identifiés par le système d'identification (6) et/ou en fonction des opérations de raccordement surveillées par le dispositif de surveillance (18).

5. Procédé selon l'une quelconque des revendications précédentes, dans lequel le composant (2) fourni respectivement aux fins du raccordement est identifié par le système d'identification (6) à l'aide d'un marquage (8) appliqué au niveau du composant (2), se présentant sous la forme d'un code à barres ou de caractères, et/ou à l'aide d'une couleur du composant (2) et/ou d'un diamètre du composant (2) et/ou d'une dimension d'au moins un axe d'extension principal et/ou d'une cote de géométrie du composant (2).

6. Procédé selon l'une quelconque des revendications précédentes, dans lequel le point de raccordement réel, auquel le composant (2) a été réellement raccordé, est surveillé au moyen d'un dispositif de surveillance (18) et un message d'erreur est envoyé en cas de divergence du point de raccordement réel détecté par rapport au point de raccordement théorique (7), dans lequel de préférence au moins une image, fournie au cours d'une et/ou après une étape de montage, de l'installation de commutation (1) est évaluée au moyen d'un système d'évaluation d'image (9) par le dispositif de surveillance (18), dans lequel un composant (2) identifié par le système d'évaluation d'image (9) est comparé, quant à sa position réelle et/ou orientation réelle et/ou câblage réel obtenu(e) à partir de l'image est comparé à une position théorique et/ou orientation théorique fournie par le système de définition de raccordement (19) pour le composant identifié (2), dans lequel un message d'erreur est émis dans le cas d'une divergence lors de ladite comparaison théorique-réel.

7. Procédé selon la revendication précédente, dans lequel au moins une des étapes de surveillance suivantes est exécutée par le dispositif de surveillance (18) :
- lors de l'installation d'un embout, surveillance si un conduit est isolé avec une section transversale correcte et/ou sur la longueur correcte et/ou si un embout a été serti en bonne et due forme ;
- surveillance de l'utilisation d'un outil prédéfini ;
- surveillance de la pose d'un conduit dans une couleur prédéfinie et/ou avec une section transversale prédéfinie ;
- surveillance de la butée d'extrémités de conducteur d'une manière prédéfinie ;
- surveillance de montages erronés ;
- surveillance du montage d'un composant (2) au niveau d'un emplacement prédéfini de l'installation de commutation (1).

8. Procédé selon l'une quelconque des revendications précédentes, dans lequel est montée en tant qu'installation de commutation (1) une armoire de distribution, dans laquelle sont montés différents composants (2) électroniques et électroniques de puissance tels que des convertisseurs de fréquence, des condensateurs et des modules émetteurs de signaux d'une part et différents câbles avec des diamètres de câble différents d'autre part.

9. Dispositif d'aide au montage servant à simplifier le montage en bonne et due forme d'installations de commutation (1) électriques, qui sont élaborées peu à peu à partir d'une pluralité de différents composants (2) dans un ordre non fixé à l'avance, avec un système d'identification (6) servant à identifier un composant (2) respectivement tenu à disposition pour être raccordé dans l'installation de commutation, dans lequel le système d'identification (6) présente un lecteur de code (12) servant à lire un marquage (8) appliqué sur un composant (2) à monter et/ou un système d'évaluation d'image (9) servant à évaluer une image de caméra du composant (2) maintenu dans la zone de caméra et à identifier le composant à partir du marquage lu et/ou des données d'image évaluées, un système de définition de point de raccordement (19) servant à définir au moins un point de raccordement spécifique (7), auquel le composant (2) identifié est à raccorder, en fonction d'un signal du système d'identification (6), à partir d'un système électrique de CAD et/ou d'un jeu de données CAD, qui reproduit l'installation de commutation et/ou son plan de commutation, et d'un système de réalité augmentée (ARS) comprenant un écran (4) servant à afficher une image de l'installation de commutation (1) et un dispositif d'incrustation servant à incruster l'au moins un point de raccordement (7) du composant (2) identifié sur l'image, affichée sur l'écran (4), de l'installation de commutation (1).

10. Dispositif d'aide au montage selon la revendication précédente, dans lequel une caméra (10) dirigée sur l'installation de commutation (1) à monter est prévue pour fournir en tant qu'image en direct l'image à afficher sur l'écran (4), dans lequel l'écran (4) et la caméra (10) sont intégrés dans des lunettes intelligentes (11) à porter par l'opérateur.

11. Dispositif d'aide au montage selon l'une quelconque des revendications précédentes, dans lequel le système de réalité augmentée (ARS) présente une interface de données CAD et peut être raccordé à un système électrique CAD, dans lequel l'installation de commutation (1) et/ou son plan de commutation peuvent être générés et/ou mémorisés.

12. Dispositif d'aide au montage selon l'une quelconque des revendications précédentes, dans lequel le système d'identification (6) présente un lecteur de codes à barres.

13. Dispositif d'aide au montage selon l'une quelconque des revendications précédentes, dans lequel est prévu un dispositif de surveillance (18) servant à surveiller le point de raccordement réel, auquel le composant (2) a été réellement raccordé, et servant à fournir un message d'erreur en cas d'écart du point de raccordement réel détecté par rapport au point de raccordement théorique (7), dans lequel le dispositif de surveillance (18) présente de préférence un système d'évaluation d'image (9) servant à évaluer au moins une image prise au cours d'une et/ou après une étape de montage et présente un dispositif de comparaison servant à comparer des informations obtenues par l'évaluation d'image concernant une position réelle et/ou une orientation réelle et/ou un câblage réel d'un composant (2) identifié à une position théorique et/ou une orientation théorique et/ou un câblage théorique.

14. Dispositif d'aide au montage selon la revendication précédente, dans lequel est prévu un avertisseur d'erreur servant à incruster un message d'erreur sur l'image représentée sur l'écran (4) en fonction d'un signal du système de comparaison.
